Europäisches Patentamt

(19) European Patent Office

Office européen des brevets

(11) Veröffentlichungsnummer: **0 324 207 B1**

(12) **EUROPÄISCHE PATENTSCHRIFT**

(45) Veröffentlichungstag der Patentschrift:
21.11.91 Patentblatt 91/47

(51) Int. Cl.$^5$: **C01B 3/38, C10K 3/02**

(21) Anmeldenummer: 88202990.3

(22) Anmeldetag: 22.12.88

(54) **Verfahren zum Erzeugen eines kohlenmonoxidreichen Gases durch Spalten von Kohlenwasserstoffen.**

(30) Priorität: 14.01.88 DE 3800862

(43) Veröffentlichungstag der Anmeldung:
19.07.89 Patentblatt 89/29

(45) Bekanntmachung des Hinweises auf die
Patenterteilung:
21.11.91 Patentblatt 91/47

(84) Benannte Vertragsstaaten:
DE FR GB IT NL

(56) Entgegenhaltungen:
DE-A- 2 809 760
DE-C- 902 251
GB-A- 681 614
GB-A- 2 139 644

(73) Patentinhaber: METALLGESELLSCHAFT AG
Reuterweg 14 Postfach 3724
W-6000 Frankfurt/M.1 (DE)

(72) Erfinder: Voeste, Theodor
Praunheimer Weg 90
W-6000 Frankfurt am Main 50 (DE)
Erfinder: Supp, Emil
Marburger Strasse 7
W-6057 Dietzenbach (DE)

## Beschreibung

Die Erfindung betrifft ein Verfahren zum Erzeugen eines kohlenmonoxidreichen Gases durch katalytisches Spalten von gasförmigen oder verdampften Kohlenwasserstoffen, wobei man einen Teil der Kohlenwasserstoffe in einer Verbrennungszone unter Zusatz eines sauerstoffhaltigen Gases bei Temperaturen von 800 bis 1500°C vollständig verbrennt, dem Verbrennungsgas den Rest der Kohlenwasserstoffe zumischt, das Gemisch durch ein Festbett eines körnigen Spaltkatalysators leitet und aus dem Festbett ein CO-reiches Produktgas mit Temperaturen von 800 bis 1150°C abzieht.

Ein solches Verfahren ist aus DE-A-2809760 bekannt, wobei man in der Verbrennung mit nur wenig überstöchiometrischer Luftzufuhr arbeitet und die Spaltung der Kohlenwasserstoffe auch nichtkatalytisch durchführt.

In bekannter Weise kann man aus gasförmigen oder verdampften Kohlenwasserstoffen durch partielle Oxidation CO-reiche Gase entweder katalytisch oder thermisch ohne Katalysator erzeugen. Die katalytische partielle Oxidation, auch katalytisch-autotherme Spaltung genannt, erfolgt ohne Wärmezufuhr von außen bei Temperaturen etwa zwischen 800 und 1000°C, wobei zum Vermeiden der Rußbildung üblicherweise noch etwa 2 Mol Wasserdampf je Mol Kohlenstoff eingesetzt werden. Bei der thermischen partiellen Oxidation erfolgt die Reaktion im Temperaturbereich von 1300 bis 1600°C, wobei man auf den Wasserdampfzusatz auch verzichten kann. Die dabei bewirkte Rußbildung nimmt man in Kauf, da sie den Ablauf des Verfahrens nicht behindert.

Bei der katalytisch-autothermen Spaltung hat die Zugabe von Wasserdampf einen hohen $CO_2$-Anteil im Produktgas zur Folge, so daß die Ausbeute an CO auf weniger als 70% des in den Kohlenwasserstoffen enthaltenen Kohlenstoff-Anteils sinkt.

Auch liegt der Bedarf an Oxidationsmittel höher als bei einer Spaltung ohne Wasserdampf. Die thermische Spaltung ohne Katalysator ergibt zwar eine CO-Ausbeute, die bei 90% und darüber liegt, doch ist der Bedarf an Oxidationsmittel groß und der gebildete Ruß muß aus dem Produktgas ausgewaschen und entsorgt werden.

Der Erfindung liegt die Aufgabe zugrunde, ein CO-reiches Produktgas zu erzeugen und gleichzeitig auf den Zusatz von Wasserdampf ganz oder weitgehend verzichten zu können, ohne daß dabei Rußbildung auftritt. Erfindungsgemäß gelingt dies beim eingangs genannten Verfahren dadurch, daß man der Verbrennungszone sauerstoffhaltiges Gas in einer Menge zusetzt, die dem zweifachen bis zehnfachen des stöchiometrischen Sauerstoffbedarfs entspricht, daß man dem sauerstoffhaltigen Verbrennungsgas den Rest der Kohlenwasserstoffe vorgewärmt zuführt und daß man ein Gemisch mit Temperaturen im Bereich von 700 bis 1300°C erzeugt, welches man in das Festbett des Spaltkatalysators leitet.

Als Einsatzmaterial für das Verfahren kommen insbesondere gasförmige Kohlenwasserstoffe, z.B. Erdgas, in Frage, doch können auch verdampfte Kohlenwasserstoffe mit einem Siedebereich bis etwa 160°C, z.B. Naphtha, verwendet werden. Der Teil der Kohlenwasserstoffe, den man in die Verbrennungszone leitet, beträgt etwa 10 bis 30% der Gesamtmenge an Einsatzkohlenwasserstoffen. Das Verfahren wird im Druckbereich von 1 bis 35 bar und vorzugsweise im Druckbereich von 1 bis 10 bar durchgeführt.

Es ist wichtig, in der Verbrennungszone mit einem erheblichen Sauerstoffüberschuß zu arbeiten, weil sonst die Temperatur in der Verbrennungszone auf Werte anstiege, die zur Schädigung des Katalysators führen würden.

Zweckmäßigerweise verbrennt man die Kohlenwasserstoffe in der Verbrennungszone in Gegenwart eines Zündkatalysators, der z.B. Platin oder Palladium enthält und als weitere Komponente auch Nickel enthalten kann. Auf diesen Zündkatalysator kann man aber auch verzichten.

Das Gemisch, das man dem Festbett des Spaltkatalysators zuführt, enthält durch die vorausgegangene Verbrennung der Kohlenwasserstoffe $CO_2$ und eine gewisse Menge an Wasserdampf, sowie restlichen Sauerstoff in einem Anteil von etwa 10 bis 20 Vol.%. Im allgemeinen ist es nicht notwendig, diesem Gemisch von außen zusätzlichen Wasserdampf zuzuführen. Falls erforderlich, kann man den Wasserdampfgehalt des Gemisches dadurch erhöhen, daß man Wasserdampf mit dem Verbrennungsgas oder mit den vorerwärmten restlichen Kohlenwasserstoffen einleitet. Auf alle Fälle genügt es, in dem Gemisch, das dem Spaltkatalysator zugeführt wird, einen Wasserdampfgehalt von höchstens 0,2 Mol pro Mol Kohlenstoff zu haben.

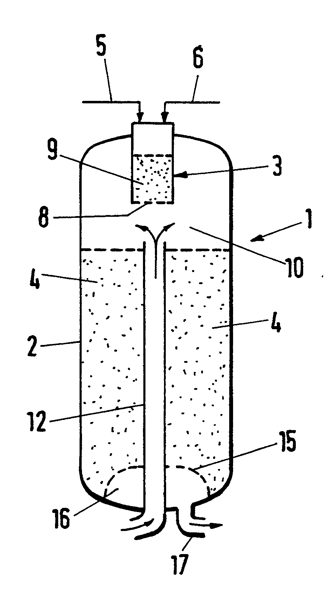

Ausgestaltungsmöglichkeiten des Verfahrens werden mit Hilfe der Zeichnung erläutert.

Der Reaktor (1) weist in einem Druckmantel (2) eine Verbrennungskammer (3) und ein Festbett (4) eines körnigen Spaltkatalysators auf. Ein Teil der umzusetzenden Kohlenwasserstoffe wird durch die Leitung (5) der Verbrennungskammer (3) zugeführt, gleichzeitig wird durch die Leitung (6) sauerstoffhaltiges Gas, z.B. Luft, herangeführt, und zwar in einer Menge, die dem zweifachen bis zehnfachen des stöchiometrischen Sauerstoffbedarfs entspricht.

In der Verbrennungskammer (3) befindet sich auf einem Rost (8) ein Festbett (9) eines körnigen Zündkatalysators. Durch den Sauerstoffüberschuß und den Zündkatalysator erfolgt in der Kammer (3) eine intensive, vollständige Verbrennung, wobei die Verbrennungsgase, vor allem $CO_2$ und $H_2O$ sowie restlicher Sauerstoff, mit Temperaturen von 800 bis 1500°C und vorzugsweise 1000 bis 1300°C durch den Rost (8) nach unten in den katalysatorfreien Mischraum (10) treten.

Der Rest der umzusetzenden Kohlenwasserstoffe, der auf 300 bis 600°C vorgewärmt ist, gelangt durch das zentrale Zufuhrrohr (12) ebenfalls zunächst in den Mischraum (10), wobei dort eine Schnelle Vermischung mit dem Verbrennungsgas aus der Kammer (3) erfolgt. Das Gemisch strömt dann durch das Festbett (4) und wird am Spaltkatalysator umgesetzt. Der Spaltkatalysator enthält z.B. 10 bis 30 Gew.% Nickel auf einem Träger aus $Al_2O_3$ und/oder MgO. Das Katalysator-Festbett (4) stützt sich auf einem Rost (15) ab, unter dem sich der Produktgas-Sammelraum (16) befindet. Das CO-reiche Produktgas wird durch den Auslaß (17) mit Temperaturen von 800 bis 1150°C abgezogen.

## BEISPIEL

Einem der Zeichnung entsprechenden Reaktor werden durch die Leitung (5) Verbrennungskammer (3) 6 Nm³ Methan, die auf 500°C vorerhitzt wurden, zugeführt. Zusammen mit 284 Nm³ Luft von 600°C wird das Methan an einem Palladium enthaltenden Zündkatalysator verbrannt. Der zugeführte Sauerstoff beträgt hierbei das etwa fünffache des stöchiometrischen Sauerstoffbedarfs. In der Verbrennungskammer herrscht ein Druck von etwa 6,5 bar, im unteren Teil des Reaktors (1) beträgt der Druck etwa 6 bar.

In der Kammer (3) entstehen 290 Nm³ eines Verbrennungsgases mit folgender Zusammensetzung :

| | |
|---|---|
| $CO_2$ | $6,0$ Nm³ |
| $H_2O$ | $12,0$ Nm³ |
| $N_2$ | $225,2$ Nm³ |
| $O_2$ | $46,8$ Nm³ |
| Summe | $290,0$ Nm³ |

Diesem Verbrennungsgas werden 94 Nm³ Methan aus dem Rohr (12) zugemischt, wobei ein Gasgemisch mit einer Temperatur von 930°C entsteht, das sich wie folgt zusammensetzt :

| | |
|---|---|
| $CO_2$ | $1,56$ Vol.% |
| $H_2O$ | $3,13$ Vol.% |
| $N_2$ | $58,65$ Vol.% |
| $O_2$ | $12,18$ Vol.% |
| $CH_4$ | $24,48$ Vol.% |

Durch die im Reaktor gegebene Anordnung gelangt das Gasgemisch mit einer Verweilzeit im Mischraum (10) von weniger als 0,5 Sekunden in das Festbett (4) des Spaltkatalysators. Dieser Katalysator enthält 20 Gew.% Nickel auf einem Träger aus $Al_2O_3$.

Die Verweilzeit des umzusetzenden Gemisches im Festbett (4) beträgt etwa 10 Sekunden. Das am Auslaß (17) mit einer Temperatur von 950°C abgezogene Produktgas hat folgende Zusammensetzung :

| | |
|---|---|
| $CO_2$ | $0,92$ Vol.% |
| CO | $17,94$ Vol.% |
| $H_2$ | $35,00$ Vol.% |
| $N_2$ | $43,14$ Vol.% |
| $CH_4$ | $0,28$ Vol.% |
| $H_2O$ | $2,72$ Vol.% |

Von dem mit dem Einsatz-Methan in das Verfahren eingebrachten Kohlenstoff werden 93,7% als CO mit dem Produktgas ausgebracht. Diese hohe CO-Produktion ist vor allem darauf zurückzuführen, daß man ohne Wasserdampf-Zusatz arbeitet.

## Patentansprüche

1. Verfahren zum Erzeugen eines kohlenmonoxidreichen Gases durch katalytisches Spalten von gasförmigen oder verdampften Kohlenwasserstoffen, wobei man einen Teil der Kohlenwasserstoffe in einer Verbrennungszone unter Zusatz eines sauerstoffhaltigen Gases bei Temperaturen von 800 bis 1500°C vollständig verbrennt, dem Verbrennungsgas den Rest der Kohlenwasserstoffe zumischt, das Gemisch durch ein Festbett eines körnigen Spaltkatalysators leitet und aus dem Festbett ein CO-reiches Produktgas mit Temperaturen von 800 bis 1150°C abzieht, dadurch gekennzeichnet, daß man der Verbrennungszone sauerstoffhaltiges Gas in einer Menge zusetzt, die dem zweifachen bis zehnfachen des stöchiometrischen Sauerstoffbedarfs entspricht, daß man dem sauerstoffhaltigen Verbrennungsgas den Rest der Kohlenwasserstoffe vorgewärmt zuführt und daß man ein Gemisch mit Temperaturen im Bereich von 700 bis 1300°C erzeugt, welches man in das Festbett des Spaltkatalysators leitet.

2. Verfahren nach Anspruch 1, dadurch gekennzeichnet, daß man den Rest der Kohlenwasserstoffe vor dem Vermischen mit dem Verbrennungsgas auf 300 bis 600°C vorwärmt.

3. Verfahren nach Anspruch 1 oder 2, dadurch gekennzeichnet, daß das Gemisch aus dem Verbrennungsgas und dem Rest der Kohlenwasserstoffe Temperaturen von 800 bis 1300°C aufweist.

4. Verfahren nach Anspruch 1 oder einem der folgenden, dadurch gekennzeichnet, daß man die Kohlenwasserstoffe in der Verbrennungszone in Gegenwart eines Zündkatalysators verbrennt.

5. Verfahren nach Anspruch 1 oder einem der folgenden, dadurch gekennzeichnet, daß das Gemisch aus dem Verbrennungsgas und dem Rest der Kohlenwasserstoffe einen Wasserdampfgehalt von höchstens 0,2 Mol pro Mol Kohlenstoff aufweist.

## Claims

1. Process for producing a carbon monoxide-rich gas by catalytic cracking of gaseous or vaporised hydrocarbons, whereby part of the hydrocarbons is completely burned at temperatures of 800 to 1500°C in a combustion zone with the addition of an oxygen-containing gas, the rest of the hydrocarbons are admixed to the combustion gas, the mixture is passed through a fixed bed of a granular cracking catalyst and a CO-rich product gas is withdrawn from the fixed bed at temperatures of 800 to 1150°C, characterised in that oxygen-containing gas is added to the combustion zone in a quantity which corresponds to two to ten times the stoichiometric oxygen requirement, that the rest of the hydrocarbons are supplied, preheated, to the oxygen-containing combustion gas and that a mixture is produced at temperatures in the range of 700 to 1300°C which is passed into the fixed bed of the cracking catalyst.

2. Process according to Claim 1, characterised in that the rest of the hydrocarbons are preheated to 300 to 600°C before mixing with the combustion gas.

3. Process according to Claim 1 or 2, characterised in that the mixture of the combustion gas and the rest of the hydrocarbons is at temperatures of 800 to 1300°C.

4. Process according to Claim 1 or one of the following Claims, characterised in that the hydrocarbons are burned in the combustion zone in the presence of an igniting catalyst.

5. Process according to Claim 1 or one of the following Claims, characterised in that the mixture of the combustion gas and the rest of the hydrocarbons has a water vapour content of at most 0.2 moles per mole carbon.

## Revendications

1. Procédé d'obtention d'un gaz riche en monoxyde de carbone par craquage catalytique d'hydrocarbures sous forme de gaz ou sous forme de vapeur, qui consiste à brûler complètement une partie des hydrocarbures dans une zone de combustion, avec addition d'un gaz contenant de l'oxygène, à des températures de 800 à 1500°C, à mélanger le reste des hydrocarbures au gaz de combustion, à envoyer le mélange dans un lit fixe d'un catalyseur de craquage en grains et à retirer du lit fixe un produit gazeux riche en CO à des températures de 800 à 1150°C, caractérisé en ce qu'il consiste à envoyer à la zone de combustion du gaz contenant de l'oxygène en une quantité qui représente de deux à dix fois les besoin stoechiométriques d'oxygène, à envoyer le reste des hydrocarbures préchauffés au gaz de combustion contenant de l'oxygène et à obtenir un mélange à des températures comprises entre 700 et 1300°C que l'on envoie dans le lit fixe du catalyseur de craquage.

2. Procédé selon la revendication 1, caractérisé en ce qu'il consiste à préchauffer entre 300 et 600°C le reste des hydrocarbures avant le mélange avec le gaz de combustion.

3. Procédé selon la revendication 1 ou 2, caractérisé en ce que le mélange du gaz de combustion et du reste des hydrocarbures présente des températures de 800 à 1300°C.

4. Procédé selon la revendication 1 ou l'une des suivantes, caractérisé en ce qu'il consiste à brûler les hydrocarbures dans la zone de combustion en la présence d'un catalyseur d'allumage.

5. Procédé selon la revendication 1 ou l'une des suivantes, caractérisé en ce que le mélange du gaz de combustion et du reste des hydrocarbures a une teneur en vapeur d'eau d'au plus 0,2 mole par mole d'hydrocarbure.